Europäisches Patentamt

European Patent Office

Office européen des brevets

(19)

(11) Numéro de publication: **0 056 534**
**B1**

(12) **FASCICULE DE BREVET EUROPEEN**

(45) Date de publication du fascicule du brevet:
20.03.85

(21) Numéro de dépôt: 81401839.6

(22) Date de dépôt: **20.11.81**

(51) Int. Cl.⁴: **B 62 B 3/10**

(54) **Pare-chocs pour chariot destiné à recevoir des marchandises diverses, notamment dans les magasins à grande surface.**

(30) Priorité: **16.12.80 FR 8026649**

(43) Date de publication de la demande:
**28.07.82 Bulletin 82/30**

(45) Mention de la délivrance du brevet:
**20.03.85 Bulletin 85/12**

(84) Etats contractants désignés:
**BE DE GB IT LU NL**

(56) Documents cités:
**DE - A - 2 809 909**
**US - A - 3 195 912**
**US - A - 4 055 362**

(73) Titulaire: **ATELIERS REUNIS, 13, rue de la Mairie B.P.
No 47, F-67300 Schiltigheim (FR)**

(72) Inventeur: **Levy-Joseph, Marc, 33, Allée de la Robertsau,
F-67000 Strasbourg (FR)**

(74) Mandataire: **Tony-Durand, Serge, Cabinet
Tony-Durand 22, Boulevard Voltaire, F-75011 Paris (FR)**

ACTORUM AG

EP 0 056 534 B1

## Description

La présente invention a pour objet un pare-chocs pour chariot destiné à recevoir des marchandises diverses, notamment dans les magasins à grande surface, adapté pour être monté sur la partie avant du chariot.

On connaît des pare-chocs pour chariots destinés à la clientèle des magasins à grande surface, réalisés en une matière plastique souple, qui viennent se fixer sur la partie frontale des chariots, afin d'éviter des blessures par chocs aux·talons d'autres personnes.

Ainsi le US-A-4.055.362 décrit un pare-chocs, qui comporte un corps creux apte à s'emboîter sur la partie avant d'un tel chariot et qui est traversé par des organes de fixation de ce corps creux à une pièce de retenue.

Cependant, ces pare-chocs présentent entre autres inconvénients, le fait qu'ils doivent être adaptés dimensionnellement à chaque largeur de chariot, de sorte qu'il faut fabriquer autant de modèles de pare-chocs qu'il existe de chariots de largeurs différentes, afin de pouvoir disposer des pare-chocs de largeurs correspondant à chaque largeur de chariot. Cela impose à la fabrication des contraintes rendant celle-ci relativement onéreuse.

De plus, ces pare-chocs connus manquent souvent de souplesse et ne remplissent donc pas à cet égard leur fonction de façon réellement satisfaisante.

L'invention a pour but de remédier à ces inconvénients en réalisant un pare-chocs qui puisse être aisément adapté à des chariots de largeur variable dans une gamme déterminée, et qui soit fixé solidement à la partie frontale du chariot tout en présentant le degré de souplesse voulu pour amortir les chocs.

A cet effet, le corps creux du pare-choc selon l'invention comporte deux parties de longueurs égales, s'étendant chacune le long de la moitié de la partie avant du chariot, et qui sont reliées par une pièce centrale de jonction apte à s'emboîter dans les parties du corps et à coiffer les extrêmités de celles-ci.

Dans ces conditions, si l'on réalise tout d'abord un pare-chocs monobloc dont la longueur correspond à celle de la partie avant la plus large de la gamme des différents chariots devant être équipés des ces pare-chocs, il est aisé d'adapter ce pare-chocs à des longueurs décroissantes de la partie avant du socle des chariots en procédant de la manière suivante: on découpe dans la région médiane du pare-chocs une portion de celui-ci correspondant à la réduction de largeur du socle du chariot, par rapport à la largeur maximum. Puis on emboîte les deux demi-pare-chocs ainsi constitués dans les deux côtés de la pièce centrale de jonction, et on fixe le pare-chocs de longueur réduite ainsi constitué à la partie avant du chariot.

Suivant une particularité de l'invention, la pièce centrale de jonction est profilée en correspondance avec la courbure du corps, lequel est arrondi extérieurement, de façon que sa surface intérieure puisse venir s'appliquer sur la surface extérieure arrondie dudit corps, et cette pièce de jonction comprend une nervure intérieure transversale de raidissement, recevant des éléments aptes à assurer l'assemblage de ladite pièce de jonction avec les deux parties du corps du pare-chocs.

Aux dessins annexés, on a représenté à titre d'exemples non limitatifs, deux modes de réalisation du pare-chocs selon l'invention.

– La figure 1 est une vue en perspective d'un chariot équipé à la partie avant de son socle, d'une première forme de réalisation du pare-chocs selon l'invention.

– La figure 2 est une demi-vue en élévation frontale à échelle agrandie, du pare-chocs visible à la figure 1.

– La figure 3 est une demi-vue de dessus correspondant à la figure 2.

– La figure 4 est une demi-vue en élévation du côté intérieur du pare-chocs correspondant à la figure 2.

– Les figures 5 et 6 sont des vues en coupe transversale respectivement suivant V–V et VI–VI de la figure 3.

– La figure 7 est une vue en coupe transversale suivant VII–VII de la figure 4.

– La figure 8 est une vue en coupe longitudinale partielle suivant VIII–VIII de la figure 4.

– La figure 9 est une vue en perspective d'une seconde forme de réalisation du pare-chocs suivant l'invention, et de la partie avant du chariot sur lequel est monté ce pare-chocs.

– La figure 10 est une demi-vue de dessus en plan à échelle agrandie, du pare-chocs de la figure 9.

– La figure 11 est une vue en coupe transversale suivant XI–XI de la figure 10.

– La figure 12 est une vue en perspective de la pièce centrale de jonction faisant partie du pare-chocs des figures 9 à 11.

– La figure 13 et une vue en coupe transversale du pare-chocs des figures 10 et 11 dans le plan médian vertical de la pièce de jonction, les galeries du socle du chariot n'étant pas représentées.

– La figure 14 est une vue en coupe de la pièce de jonction suivant XIV–XIV de la figure 13.

– La figure 15 est une vue de dessus en plan de la pièce de jonction des figures 12 à 14.

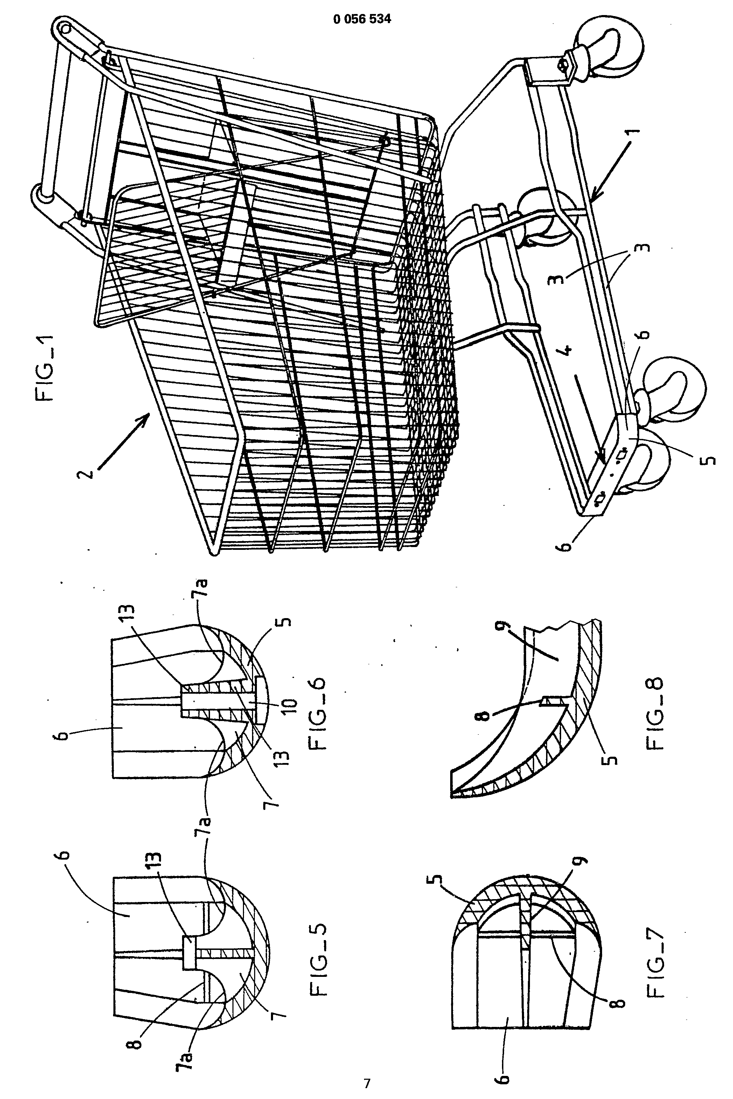

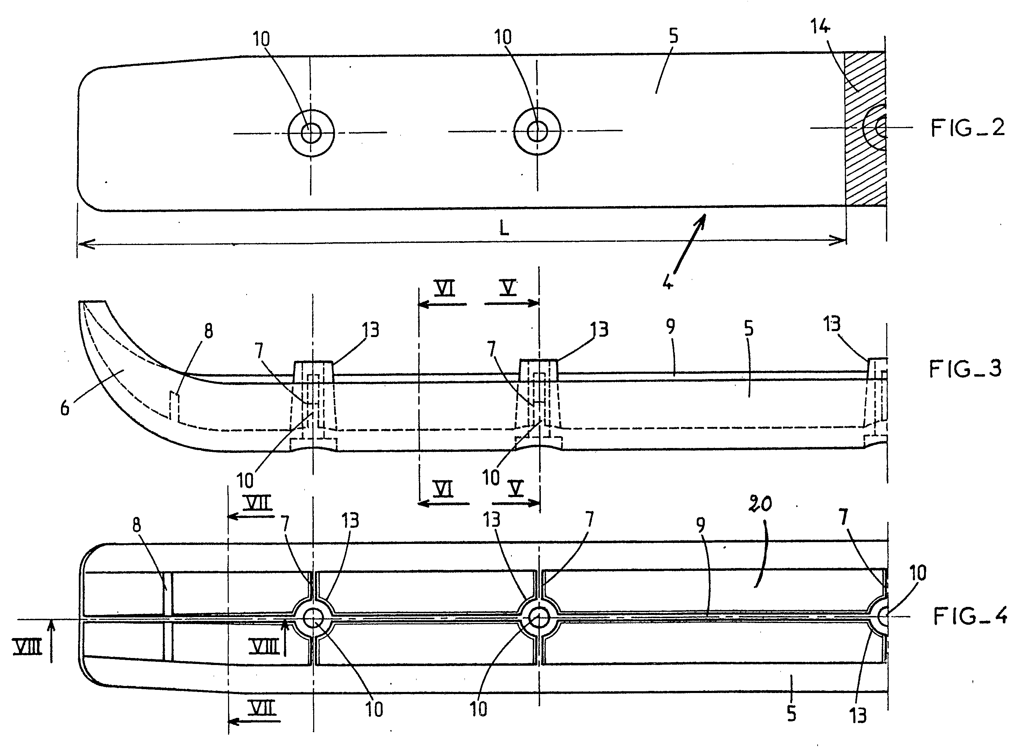

– Les pare-chocs représentés aux figures 1 à 15, réalisées en une matière souple telle qu'une matière plastique appropriée, comme le chlorure de polyvinyle plastifié, sont destinés à équiper des chariots de transport de marchandises diverses, notamment pour les clients dans les magasins à grande surface.

On décrira d'abord la première réalisation du pare-chocs en référence aux figures 1 à 8.

Ce pare-chocs est prévu pour être monté sur la partie avant du socle 1 d'un chariot 2 (figure 1), afin d'éviter des blessures par chocs aux talons des personnes environnantes.

Le chariot 2 est connu en soi et ne sera donc pas décrit en détail.

Dans l'exemple représenté, le socle 1 du chariot 2 comporte deux galeries 3 constituées par des fils métalliques superposés, coudés à angle droit à la partie avant du chariot et qui reçoivent le pare-chocs visé par l'invention.

Ce pare-chocs, désigné dans son ensemble par la référence 4, comporte un corps creux allongé 5, dont la longueur est sensiblement égale à la largeur du socle 1 à l'avant du chariot. Le corps 5, arrondi extérieurement et pourvu de deux parties terminales arrondies 6 formant des retours aptes à coiffer les angles arrondis des galeries 3, est évidé sur toute sa longueur. Dans cet évidement 20 sont ménagées une série de nervures transversales incurvées 7, au nombre de cinq dans cet exemple; ces nervures étant complétées au niveau des retour arrondis 6 par des nervures terminales 8.

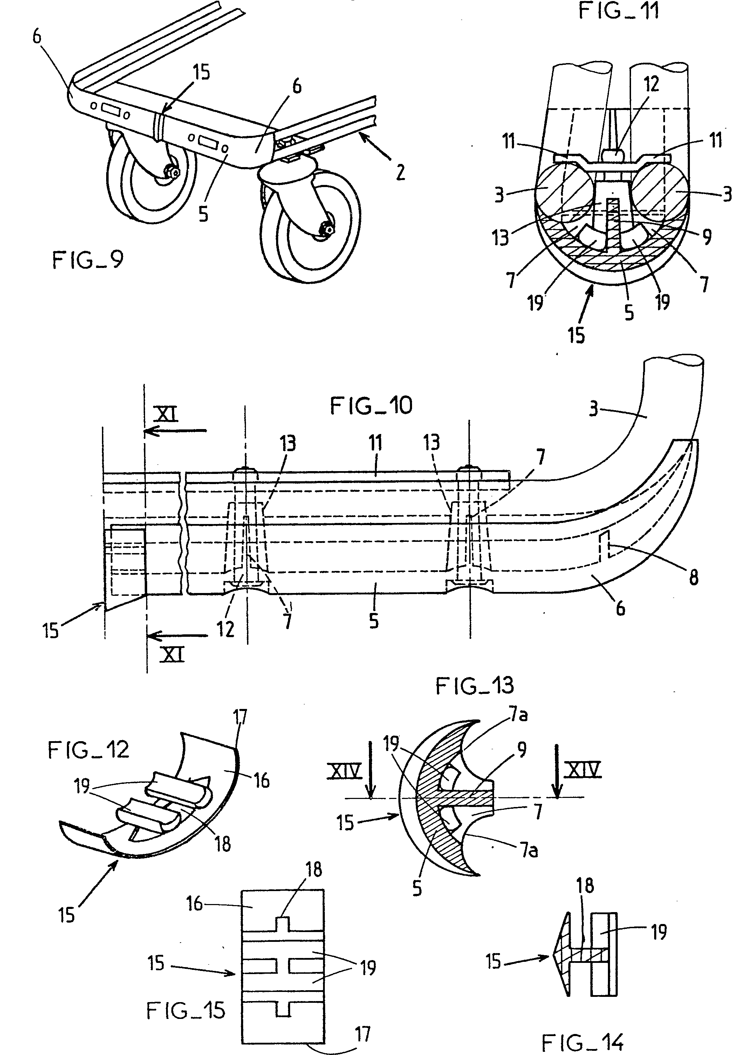

Les nervures 7 présentent des parties concaves 7a (figures 5 et 6) dont la courbure est adaptée pour leur permettre d'épouser exactement le profil circulaire des galeries 3, chaque nervure 7 présentant ainsi deux parties concaves semi-circulaires 7a. Ces nervures sont reliées entre elles par une cloison longitudinale intérieure 9 s'étendant d'une extrémité à l'autre du corps 5, avec une hauteur décroissante à partir des nervures terminales 8, jusqu'à ce qu'elles rejoignent les extrémités des retours 6. Les nervures 7 sont traversées par des organes de fixation du corps 5 à une pièce de retenue 11 disposée en appui sur la face des galeries 3 opposée à la face avant recevant les nervures 7. Dans l'exemple décrit, ces organes de fixation sont constitués par des rivets 12 (représentés en traits mixtes à la figure 10), qui s'insèrent dans des perçages 10 formés dans le corps 5 et dans des gaines 13, formées à l'intersection des nervures 7 et de la cloison longitudinale 9. Les rivets 12, qui peuvent d'ailleurs être remplacés par des vis, viennent s'ancrer dans la contre-bride 11, de préférence métallique, placée en appui contre la face arrière des galeries 3.

Le montage du pare-chocs 4 sur l'avant du socle 1 est extrêmement aisé à exécuter, puisqu'il suffit, après avoir appliqué les nervures 7 sur les galeries 3 de façon à ce que ces dernières viennent parfaitement s'emboîter dans les concavités 7a, et après avoir mis en place la contre-bride 11, d'introduire dans les gaines 13 les vis ou rivets nécessaires, par exemple les rivets 12. Le serrage de ces derniers assujettit solidement le pare-chocs 4 aux galeries 3 par l'intermédiaire de la contre-bride 11.

Le pare-chocs 4 ayant une longueur correspondant à la plus grande largeur de socle de la gamme des chariots qui doivent être équipés de tels pare-chocs, on peut réaliser, à partir du pare-chocs 4, des pare-chocs de longueur inférieure, adaptés aux largeurs décroissantes des socles des autres chariots de la gamme, et ce en procédant comme on va l'expliquer ci-après.

On découpe dans la partie centrale du pare-chocs 4, une portion de pare-chocs dont une moitié 14 a été représentée (figure 2); cette portion découpée s'étend de part et d'autre du plan médian du pare-chocs, sur une longueur correspondant à la différence entre la largeur du pare-chocs 4 et la largeur de l'avant du socle du chariot à équiper.

Pour effectuer l'assemblage des deux demi-pare-chocs ainsi obtenus, qui ont chacun une longueur L (figure 2) égale à la longueur de la moitié du pare-chocs 4 diminuée de la longueur de la partie enlevée 14, l'invention prévoit une pièce centrale de jonction 15 (visible en particulier aux figures 12 à 15), profilée en correspondance avec la courbure extérieure du corps 5, de façon que sa surface intérieure 16 puisse venir s'appliquer sur la surface extérieure arrondie du corps 5.

La pièce de jonction 15 comprend ainsi une partie mince 17 semi-circulaire qui peut glisser sur la surface extérieure du corsp 5, et une nervure intérieure transversale 18 de raidissement, qui reçoit des éléments aptes à assurer l'assemblage de la pièce 15 avec les deux parties du pare-chocs de longueur L placées de part et d'autre de cette pièce 15. Dans l'exemple décrit, les éléments d'assemblage sont constitués par deux tétons 19 solidaires de la nervure 7, s'étendant longitudinalement de part et d'autre de la cloison intérieure 9 de façon à pouvoir enserrer celle-ci entre eux. Plus précisément, les parties des tétons 19 qui débordent de chaque côté de la nervure 18 viennent se placer en contact glissant sur les faces opposées de l'extrémité de la partie tronquée correspondante de la cloison 19, lorsqu'on met en place la pièce de jonction 15, de façon que la surface intérieure 16 vienne glisser sur la surface extérieure arrondie des deux demi-corps tronqués du pare-chocs.

En fin de positionnement de la pièce 15, les deux extrémités des demi-cloisons fromées à partir de la cloison 9 viennent en butée contre les faces opposées de la nervure 18.

L'assemblage des deux demi-pare-chocs tronqués, ayant la longueur L après découpe d'une portion centrale double de la portion 14 illustrée à la figure 2, s'effectue donc très aisément au moyen de la pièce de jonction 15. Pour cela, on engage les tétons 19 de chaque côté de l'extrémité de la cloison tronquée 9 d'un demi-pare-chocs, la pièce 15 étant dimensionnée de façon que sa partie incurvée 17 coiffe en même temps extérieurement la surface extérieure du demi-corps du pare-chocs, puis on encastre de façon similaire la seconde moitié du pare-chocs dans la pièce 15, de façon à venir placer l'extrémité de la demi-cloison intérieure en butée contre la nervure 18. Le pare-chocs est alors assemblé, et il ne reste plus qu'à le fixer aux galeries 3 par l'intermédiaire de vis ou de rivets 12 et de la contre-bride 11, comme décrit précédemment pour la première forme de réalisation.

Le pare-chocs qui vient d'être décrit présente les avantages suivants.

La pièce de jonction 15 permet d'adapter aisément la longueur du pare-chocs à la largeur du socle du chariot à équiper, en partant d'un pare-chocs 4 dont la longueur correspond à la largeur maximum du socle dans la gamme considérée des chariots. En effet, il suffit comme on l'a expliqué ci-dessus, de découper une portion médiane de longueur appropriée dans le corps 5, puis d'assembler les deux demi-corps ainsi obtenus au moyen de la pièce centrale 15, cet assemblage se faisant de manière particulièrement simple.

Bien entendu, la fixation du pare-chocs à l'avant du chariot est obtenue par un contre-bride 11 de longueur correspondant à la largeur du socle du chariot considéré. Cette contre-bride est toujours réalisée d'une seule pièce, avec un entraxe pour ses trous intérieurs variable selon les besoins, et correspondant à l'entraxe des gaines 13 de réception des organes de fixation. Cette contre-bride 11 empêche un glissement latéral possible des deux demi-pare-chocs, et asssure donc un assemblage rigide de ceux-ci.

Le fait que le corps 5 soit creux de part et d'autre de la cloison 9 lui assure une meilleure souplesse et évite comme déjà indiqué une masse injectée trop importante.

Enfin, les parties concaves 7a des nervures 7, dont le rayon de courbure est égal au rayon des galeries 3, permet conjointement à l'agencement des retours arrondis 6, d'appliquer le pare-chocs sur les galeries 3 en épousant parfaitement le profil de celles-ci. Ceci contribue donc, avec le montage de la contre-bride 11, à assurer une parfaite fixation du pare-chocs au socle du chariot.

Ainsi le nombre des nervures de raidissement 7 peut varier en fonction de la largeur du pare-chocs, et les gaines 13 de réception des éléments de fixation tels que vis ou rivets, pourraient être aménagées à des emplacements autres que les intersections de la cloison 9 et des nervures 7.

L'ensemble du pare-chocs est réalisé d'une seule pièce par injection de matière plastique appropriée.

Le pare-chocs selon l'invention est particulièrement destiné aux chariots utilisés par la clientèle des magasins à grande surface, mais peut éventuellement être monté sur des chariots de types différents, par exemple des chariots porte-bagages dans les gares.

**Revendications**

1. Pare-chocs pour chariot destiné à recevoir des marchandises diverses, notamment dans les magasins à grande surface, comportant un corps creux apte à s'emboîter sur la partie avant du socle d'un tel chariot et qui est traversé par des organes de fixation de se corps creux à une pièce de retenue, caractérisé en ce que le corps creux (5) comporte deux parties de longueurs égales, s'étendant chacune le long de la moitié de la partie avant du chariot, et qui sont reliées par une pièce centrale de jonction (15) apte à s'emboîter dans les deux parties du corps et à coiffer les extrêmités de celles-ci.

2. Pare-chocs selon la revendication 1, caractérisé en ce que, le corps (5) étant arrondi extérieurement, la piéce centrale de jonction (15) est profilée en correspondance avec la courbure du corps (5) de façon que sa surface intérieure (16) puisse venir s'appliquer sur la surface extérieure arrondie dudit corps (5), et cette pièce de jonction (15) comprend une nervure intérieure transversale (18) de raidissement, recevant des éléments (19) aptes à assurer l'assemblage de ladite pièce de jonction (15) avec les deux parties du corps (5) du pare-chocs.

3. Pare-chocs selon la revendication 2, caractérisé en ce que, les élements d'assemblage de la pièce de jonction (15) aux deux parties du corps sont des tétons (19) solidaires de la nervure (18) de raidissement et qui enserrent entre eux des cloisons (19) longitudinales intérieures formées dans les deux parties du corps (5), les extrémités de ces cloisons venant en butée contre la nervure transversale (18) de la pièce de jonction (15).

4. Pare-chocs selon l'une des revendications 1 à 3, dont le corps est muni de parties terminales arrondies (6), formant des retours aptes à coiffer les angles de la partie frontale du chariot, caractérisé en ce que la pièce de retenue est constituée par une contre-bride (11) s'étendant le long du côté intérieur des galeries (3) du chariot, dans laquelle viennent s'ancrer des organes de fixation tels que vis ou rivets (12), qui traversent une cloison longitudinale intérieure (19) du corps (5), ces organes de fixation (12) étant de préférence placés aux intersections de ladite cloison (19) et des nervures transversales (7) épousant le profil des galeries (3).

**Patentansprüche**

1. Stossfänger für Einkaufswagen, insbesondere für Supermärkte, mit einem sich auf das Fahrgestellvorderteil aufsetzenden Hohlkörper, welcher zur Befestigung an einem Widerlager von Halteorganen durchsetzt ist, dadurch gekennzeichnet, dass der Hohlkörper (5) zwei gleich lange, sich jeweils längs einer Hälfte des Fahrgestellvorderteils erstreckende Teile aufweist, die durch ein, beide Teile des Hohlkörpers erfassendes, dessen Kanten überdeckendes, zentrales Verbindungsteil (15) verbunden sind.

2. Stossfänger nach Anspruch 1, dadurch gekennzeichnet, dass der Hohlkörper (5) aussen abgerundet und das zentrale Verbindungsteil (15) entsprechend der Querschnittswölbung des Hohlkörpers (5) so geformt ist, dass sich dessen Innenseite (16) an die Aussenfläche des Hohlkörpers (5) anschmiegt, wobei das Verbindungsteil (15) im Innern eine Querrippe (18) mit Befestigungselementen (19) aufweist, die das Verbindungsteil (15) mit den beiden Teilen des Hohlkörpers verbinden.

3. Stossfänger nach Anspruch 2, dadurch gekennzeichnet, dass die Befestigungselemente (15) für die beiden Teile mit der Querrippe (18) verbundene Köpfe (19) sind, die eine bis an die Querrippe (18) heranreichende, in den Hohlkörpern (5) längsverlaufende Rippe (9) zwischen sich festklemmen.

4. Stossfänger nach Anspruch 1 bis 3, dadurch gekennzeichnet, dass die Halterungen aus einer sich längs über die Innenseite des Rahmens (3) erstreckenden Schiene (11) gebildet ist, in welche Halteorgane, wie Schrauben oder Nieten (12) eingreifen, die dabei eine Längsrippe (9) im Hohlkörper (5) durchsetzen, wobei die Halteorgane (12) vorzugsweise in den Schnittpunkten der Längsrippen (9) mit den sich an den Rahmen (3) anlegenden Querrippen (7) angeordnet sind.

## Claims

1. Bumper for trolley which is intended to receive merchandise of different kinds, especially in supermarket stores, comprising a hollow body which is capable of engaging over the front portion of the base frame of a trolley of this type and which is traversed by elements for attaching this hollow body to a retaining member, characterized in that the hollow body (5) has two portions of equal length which extend in each case along one-half of the front portion of the trolley and which are joined together by means of a central coupling component (15) which is capable of engaging within the two portions of the body and of covering the ends of these latter.

2. Bumper in accordance with claim 1, characterized in that, the body (5) being rounded externally, the central coupling component (15) is given a shape which corresponds to the curvature of the body (5) in such a manner as to ensure that its internal surface (16) can be applied against the rounded external surface of said body (5), and this coupling component (15) is provided with a transverse internal stiffening rib (18) for receiving members (19) which are capable of joining said coupling component (15) to the two portions of the bumper body (5).

3. Bumper in accordance with claim 2, characterized in that the members for joining the coupling component (15) to the two portions of the body are studs (19) which are rigidly fixed to the stiffening rib (18) and which clamp between them internal longitudinal partitions (9) in the two portions of the body (5), the ends of these partitions being abuttingly applied against the transverse rib (18) of the coupling component (15).

4. Bumper in accordance with one of claims 1 to 3, the body of which is provided with rounded end portions (6) forming return bends which ar capable of covering the corners of the front portion of the trolley, characterized in that the retaining member is constituted by a counterflange (11) which extends along the inside of the side rails (3) of the trolley and in which are anchored fixing members such as screws or rivets (12) which pass through an internal longitudinal partition (19) of the body (5), these fixing members (12) being preferably placed at the intersections of said partition (19) and of transverse ribs (7) which closely conform to the profile of the side rails (3).

0 056 534

FIG_1

FIG_5

FIG_6

FIG_7

FIG_8

7

FIG_2

FIG_3

FIG_4

0 056 534

FIG_9

FIG_11

FIG_10

FIG_12

FIG_13

FIG_15

FIG_14